# EUROPÄISCHE PATENTANMELDUNG

(11) **EP 2 778 349 A1**
(43) Veröffentlichungstag der Anmeldung: **17.09.2014**
(21) Anmeldenummer: 13159597.7
(22) Anmeldetag: 15.03.2013
(51) Int. Cl.: F01D 9/02, F02B 37/02

(54) **Abgasturbolader mit bearbeitetem Turbinengehäuse**

(71) Anmelder: Continental Automotive GmbH, 30165 Hannover (DE)
(72) Erfinder: Fäth, Holger, 67136 Fußgönheim (DE); Böning, Ralf, 67829 Reiffelbach (DE)

(57) **Zusammenfassung**

Die Erfindung betrifft einen Abgasturbolader mit einer Turbine (1), umfassend ein auf einer Welle (5) angeordnetes Turbinenrad (14) mit einer Nabe (2) und Leitschaufeln (13), ein an ein Lagergehäuse (4) angrenzendes Turbinengehäuse (3), das zwei weitgehend parallel zueinander verlaufende Strömungskanäle (6, 7) von Abgasen aufweist, die von außen durch eine vom Turbinengehäuse (3) gebildete Spiralwand (8) begrenzt sind und voneinander durch eine vom Turbinengehäuse (3) gebildete Trennwand (9) getrennt sind und die in einem Eintrittsbereich radial offen zum Turbinenrad (14) ausgebildet sind, sodass die Abgase auf die Leitschaufeln (13) strömen. Hierbei ist eine axiale Richtung durch eine Längsrichtung der Welle (5) definiert und ein radialer Abstand durch eine Richtung senkrecht zu der Längsrichtung der Welle (5) definiert. Die Spiralwand (8) umfasst eine dem Lagergehäuse (4) zugewandte zum ersten Strömungskanal (6) gehörende Wand (10). Erfindungsgemäß weist der kleinste radiale Abstand der dem Lagergehäuse (4) zugewandten Wand (10) zur Welle (5) mindestens im Eintrittsbereich einen größeren radialen Abstand zur Welle (5) auf als der kleinste radiale Abstand der Trennwand (9) zur Welle (5). Zwischen der dem Lagergehäuse (4) zugewandten Wand (10) und der Nabe (2) ist ein Hitzeschild (12) strömungsführend angeordnet. Ein Verfahren zur Herstellung eines Abgasturboladers wird mit der Erfindung ebenfalls zur Verfügung gestellt.

## Beschreibung

Die Erfindung betrifft einen Abgasturbolader einer Brennkraftmaschine insbesondere eines Kraftfahrzeuges, der ein bearbeitetes Turbinengehäuse mit einem zweigeteilten Strömungskanal aufweist. Außerdem betrifft die Erfindung ein Verfahren zur Herstellung eines solchen Abgasturboladers.

Abgasturbolader verbessern den Wirkungsgrad eines Verbrennungsmotors und steigern so dessen Leistung. Ein Abgasturbolader weist hierzu eine Turbine mit einem Turbinenrad und einen Verdichter mit einem Verdichterrad auf, wobei die beiden Laufräder zumeist auf einer gemeinsamen Welle angeordnet sind. Das Turbinenrad wird hierbei über einen Abgasmassenstrom des Verbrennungsmotors angetrieben und treibt wiederum das Verdichterrad an. Der Verdichter verdichtet angesaugte Frischluft und führt diese dem Verbrennungsmotor zu. Die gemeinsame Welle ist in einem Lagergehäuse des Turboladers gelagert. Des Weiteren ist das Turbinenrad der Turbine in einem Turbinengehäuse angeordnet und das Verdichterrad des Verdichters in einem Verdichtergehäuse.

Abgasturbolader mit einem Zwillingsstromgehäuse zeichnen sich durch eine abweichende Form des Auspuffkrümmers und einen mindestens zweigeteilten Strömungskanal im Turbinengehäuse aus. Vor Einlass in das Turbinengehäuse werden die Abgaskanäle von jeweils zwei Zylindern (bei Vierzylindermotoren) oder drei Zylindern (bei Sechszylindermotoren) zusammengefasst. Dabei erfolgt eine Auswahl der Zylinder so, dass sich Druckschwankungen der Abgasströme positiv beeinflussen. Folglich sinkt insbesondere im niedrigen Drehzahlbereich der Abgasgegendruck und der Gaswechsel im Motor wird verbessert, was ein besseres Ansprechverhalten des Verbrennungsmotors bewirkt. Außerdem lassen sich hierdurch Verbrauch und Leistung des Verbrennungsmotors optimieren.

Die Strömungskanäle werden durch das Turbinengehäuse gebildet, das sich radial außen um die Strömungskanäle erstreckt und diese begrenzt. Die Strömungskanäle werden durch eine Trennwand voneinander getrennt, die gegebenenfalls ebenfalls von dem Turbinengehäuse gebildet ist. Die Trennung erfolgt bis in den Düsenbereich vor der Turbinenradeintrittskante. Je geringer der Abstand zwischen der Trennwand und dem Turbinenrad ausgeführt wird, desto besser ist das Ansprechverhalten des Abgasturboladers. Zum Beispiel ist in der Druckschrift US 4565505 A die Trennwand sehr nah am Turbinenrad ausgeführt. Allerdings wird dadurch die Turbineneintrittskante durch die Trennwand versperrt. Um dies zu umgehen wurde beispielsweise in der Druckschrift WO 2012060187 A1 der Abstand zwischen Trennwand und Turbinenrad groß ausgeführt.

Der vorliegenden Erfindung liegt die Aufgabe zugrunde, einen verbesserten Abgasturbolader, der ein Turbinengehäuse mit einem zweigeteilten abgasführenden Strömungskanal aufweist, zu entwickeln.

Diese Aufgabe wird durch einen Abgasturbolader mit den Merkmalen des Hauptanspruchs sowie ein Verfahren zur Herstellung eines solchen Abgasturboladers mit den Merkmalen des Nebenanspruchs gelöst. Weitere Ausführungsformen der Erfindung ergeben sich mit den Merkmalen der Unteransprüche.

Im Sinne der vorliegenden Erfindung sei unter dem Begriff "Bearbeiten" ein Abtragen von Material oder ein Zerspanen des Materials verstanden.

Der vorgeschlagene Abgasturbolader weist ein auf einer Welle angeordnetes Turbinenrad mit einer Nabe und Leitschaufeln in einem an ein Lagergehäuse angrenzenden Turbinengehäuse auf. Das Turbinengehäuse weist zwei parallel zu einander verlaufende Strömungskanäle auf, die von außen durch eine vom Turbinengehäuse gebildete Spiralwand begrenzt sind. Die Strömungskanäle sind voneinander durch eine im Turbinengehäuse verlaufende Trennwand getrennt und in einem Eintrittsbereich offen zum Turbinenrad ausgebildet, sodass die Abgase auf die Leitschaufeln strömen. Eine axiale Richtung ist durch eine Längsrichtung der Welle definiert, wobei ein radialer Abstand eine Richtung senkrecht zur Längsrichtung der Welle definiert. Die Spiralwand umfasst eine dem Lagergehäuse zugewandte, den ersten Strömungskanal begrenzende Wand. Der kleinste radiale Abstand der dem Lagergehäuse zugewandten Wand zur Welle weist mindestens im Eintrittsbereich einen größeren radialen Abstand zur Welle auf als der kleinste radiale Abstand der Trennwand zur Welle.

Die dem Lagergehäuse zugewandten Wand ist nicht radial bis zum Turbinenrad ausgebildet, sondern sie ist an der Lagergehäuseseite partiell radial offen ausgebildet (verkürzt). Das heißt, wenn man vom Lagergehäuse in Richtung des Turbinengehäuses schaut, ist die Trennwand hinterschneidungsfrei. Mit der Erfindung ist die Trennwand von der Seite des Lagergehäuses her in axialer und radialer Richtung zur Bearbeitung leicht zugänglich. Hierdurch kann auf eine aufwendige, komplexe Bearbeitungstechnik, die bisher notwendig wäre, verzichtet werden.

Die Trennwand hat generell den Nachteil, dass sie in Bezug auf die Festigkeit und Gießbarkeit dickwandig hergestellt werden muss. Durch die gießtechnisch bedingte Dicke der Trennwand werden der Düsenbereich und der Eintritt in das Turbinenrad versperrt. Dies führt zu einer ungünstigen Anströmung und somit zu einem schlechteren Wirkungsgrad des Turboladers. Wenn aber der Abstand zwischen Trennwand und Turbinenrad zu groß wird, kann in dem entstehenden Raum zwischen Trennwand und Turbinenrad das Abgas aus dem ersten Strömungskanal in den Bereich des zweiten Strömungskanals überströmen und umgekehrt. Dies führt zu einer Behinderung des Ausstromvorganges des jeweiligen anderen Strömungskanals, was wiederum zu einer Verschlechterung des Ansprechverhaltens zur Folge hat. Mit der vorliegenden Erfindung können die genannten Nachteile durch eine Bearbeitung der Trennwand von der Seite des Lagergehäuses her überwunden werden.

Die Trennwand ist in axialer Richtung von einer Lagergehäuseseite her zur Bearbeitung zugänglich. Es ist zum Beispiel möglich, die Trennwand dickwandig in Bezug auf Festigkeit und Gießbarkeit herzustellen. Danach kann die Trennwand durch Bearbeitung so dünn ausgeführt werden, dass ein Eintritt der Abgase auf das Turbinenrad minimal versperrt wird. Dies wirkt sich positiv auf die Anströmung des Turbinenrads und den Wirkungsgrad des Abgasturboladers auf. Besonders bevorzugt hat ein den Turbinenschaufeln nahe gelegenes Ende der bearbeiteten Trennwand eine axiale Wandstärke von weniger als 2 mm. Eine unbearbeitete Trennwand hat eine Wandstärke von vorzugsweise mehr als 4 mm.

Die Trennwand ist zusätzlich in radialer Richtung zur Bearbeitung zugänglich. Bevorzugt ist nach der Bearbeitung ein möglichst geringer radialer Abstand zwischen der Trennwand und dem Turbinenrad eingestellt, sodass die Abgase der beiden Strömungskanäle im Wesentlichen getrennt auf die Leitschaufeln strömen. Hierdurch wird verhindert, dass Abgas aus dem ersten Strömungskanal in den Bereich des zweiten Strömungskanals überströmt und umgekehrt. Folglich verbessert sich das Ansprechverhalten des Verbrennungsmotors.

Weiterhin ist zwischen der dem Lagergehäuse zugewandten Wand des Turbinengehäuses und der Nabe ein Hitzeschild strömungsführend angeordnet. Zum einen schützt der Hitzeschild das Lagergehäuse vor dem heißen Abgas, welches über den Strömungskanal auf das Turbinenrad strömt. Durch die hohe Temperatur des einströmenden Abgases bei dem Abgasturbolader entsteht ein hoher Wärmeeintrag in eine Lagerung der Welle im Lagergehäuse. Die Lagerung wird beispielsweise mit Schmieröl geschmiert, welches durch bei hohen Temperaturen verkoken kann. Der Hitzeschild zwischen dem Turbinengehäuse und dem Lagergehäuse reduziert den Wärmeeintrag und eine Schmierölkohlebildung kann vermieden werden. Zum anderen schließt der Hitzeschild im Wesentlichen die Lücke zwischen der dem Lagergehäuse zugewandten Wand und dem Turbinenrad. Der Hitzeschild sorgt für eine verbesserte Strömungsführung des Abgases zum Turbinenrad. Folglich treten geringere Strömungsverluste auf, was zu einem besseren Wirkungsgrad der Turbine führt. Entsprechend brauchen keine baulichen Änderungen am Lagergehäuse durchgeführt zu werden um die genannte Lücke zu überbrücken, was mit einer Kosteneinsparung einhergeht.

Während des Betriebs entstehen beim Aufheizen und Abkühlen hohe thermomechanische Spannungen und infolgedessen treten Dehnungen auf. Deswegen ist der Hitzeschild in einer Ausführungsform federnd angeordnet, damit ein Ausgleich der Dehnung der Bauteile ermöglicht wird.

Der Hitzeschild kann viel dünner ausgeführt werden als das gegossene Turbinengehäuse, was mit einer Gewichtseinsparung einhergeht. Dies hat ein Verringern der Materialkosten und eine Steigerung der Motorleistung zur Folge. Bevorzugt weist der Hitzeschild eine Wandstärke von 0,4 bis 0,5 mm auf. Bezüglich der dünnen Ausführung ist es bevorzugt, wenn der Hitzeschild aus Blech besteht. In einer bevorzugten Ausführungsform beträgt der kleinste Abstand zwischen der dem Lagergehäuse zugewandten Wand und dem Turbinenrad mindestens 10 mm.

Ferner lassen sich durch die Bearbeitung eine Neigung und ein Verlauf der Trennwand in radialer und axialer Richtung variabler einstellen. Dadurch lässt sich die Anströmung der Abgase aus den Strömungskanälen auf die Leitschaufeln optimieren, wodurch der Wirkungsgrad des Turboladers steigt. Weiterhin kann die Bearbeitung der Trennwand beispielsweise so erfolgen, dass die Trennwand während des Betriebs gleichmäßiger aufgeheizt wird, was zu einer verringerten Spannung im Material und zu einer geringeren Rissbildung führt. Dies wirkt sich positiv auf eine Dauerhaltbarkeit des Turbinengehäuses aus.

Bevorzugt hat nach der Bearbeitung der Trennwand und der Spiralwand gleichzeitig die Oberfläche der Trennwand und der Spiralwand eine verringerte Wandrauigkeit. Diese Wandrauigkeit ist bei unbearbeiteten Bauteilen relativ hoch, unter anderem, aufgrund einer beim Gießprozess entstehenden Gusshaut auf der Oberfläche des Materials. Durch die Verringerung der Wandrauigkeit werden Strömungsverluste im Eintrittsbereich verringert, was zu einem besseren Wirkungsgrad führt. Durch das Entfernen der Gusshaut kann das Material gleichmäßiger erhitzt werden und infolgedessen wird eine Rissbildung verringert. Dies führt zu einer Erhöhung der Lebensdauer der Trennwand.

Eine Fertigungstoleranz einer nicht-bearbeiteten Trennwand beträgt bedingt durch den Gießprozess typischerweise etwa 0,30 mm. Eine Fertigungstoleranz der bearbeiteten Trennwand oder Spiralwand beträgt vorzugsweise weniger als 0,10 mm, besonders bevorzugt 0,05 mm. Somit lässt sich eine axiale Position der bearbeiteten Trennwand relativ zum Turbinenrad erheblich genauer einstellen als bei einer nicht-bearbeiteten Trennwand. Ein gleicher (oder ähnlicher) Winkel der Strömungskanäle relativ zur Welle ist somit leichter einstellbar. Folglich lässt sich die Anströmung des Turbinenrades leichter umsetzen, was sich positiv auf den Wirkungsgrad auswirkt.

Mit der vorliegenden Erfindung wird außerdem ein Verfahren zur Herstellung eines Abgasturboladers nach dem Oberbegriff des Hauptanspruchs zur Verfügung gestellt. In diesem Verfahren wird zunächst das Turbinengehäuse gegossen. Hierbei wird der kleinste radiale Abstand der dem Lagergehäuse zugewandten Wand auf einem größeren radialen Abstand zur Welle eingestellt als der kleinste radiale Abstand der Trennwand zur Welle. Ferner wird der kleinste radiale Abstand der Trennwand zur Welle auf einem kleineren radialen Abstand zur Welle eingestellt als eine auf einer gleichen axialen Position gelegene Kontur der Leitschaufeln. In einem folgenden Schritt wird die Trennwand in radialer Richtung derart bearbeitet, dass die Trennwand radial bis zu den Leitschaufeln verkürzt wird und die Abgase der beiden Strömungskanäle im Wesentlichen getrennt auf das Turbinenrad strömen. Außerdem wird die Trennwand in axialer Richtung derart bearbeitet, dass eine Versperrung der Leitschaufeln durch die Trennwand minimiert wird. Dieses Verfahren ist insbesondere zur Herstellung eines Abgasturboladers nach zuvor beschriebener Art geeignet.

In einer Ausführungsform des erfindungsgemäßen Verfahrens wird ein Hitzeschild in eine Lücke zwischen der dem Lagergehäuse zugewandten Wand und der Nabe strömungsführend angebracht.

Ferner wird in einem bevorzugten Verfahren die dem Lagergehäuse zugewandte Wand derart gegossen, dass sie einen kleinsten radialen Abstand von mindestens 10 mm zum Turbinenrad aufweist.

Die Bearbeitung der Trennwand erfolgt in vorteilhafter Weise durch Zerspanen mittels eines Fräswerkzeuges, vorzugsweise eines Glockenwerkzeuges. Bevorzugt werden das Turbinengehäuse, das Turbinenrad, das Lagergehäuse, die Welle und sämtliche anderen Komponenten des Abgasturboladers nach der Bearbeitung zusammengebaut.

Ausführungsbeispiele der Erfindung werden anhand der beigefügen Figuren erläutert.

In den Figuren zeigen:
Fig. 1 einen Querschnitt eines Abgasturboladers gemäß dem Stand der Technik;
Fig. 2 einen Querschnitt eines Abschnitts einer Ausführungsform eines Abgasturboladers mit halbaxialer-radialer Zuströmung von Abgasen auf ein Turbinenrad;
Fig. 3 einen Querschnitt eines Abschnitts des Abgasturboladers markiert mit Abständen R₁, R₂ und R₃;
Fig. 4 einen Querschnitt eines Abschnitts einer weiteren Ausführungsform eines Abgasturboladers mit radialer Zuströmung der Abgase auf das Turbinenrad und
Fig. 5 einen Querschnitt eines Abschnitts einer weiteren Ausführungsform eines Abgasturboladers mit unbearbeiteter Trennwand und unbearbeiteter Spiralwand.

Funktionsgleiche Teile sind in den Figuren durchgängig mit den gleichen Bezugszeichen gekennzeichnet.

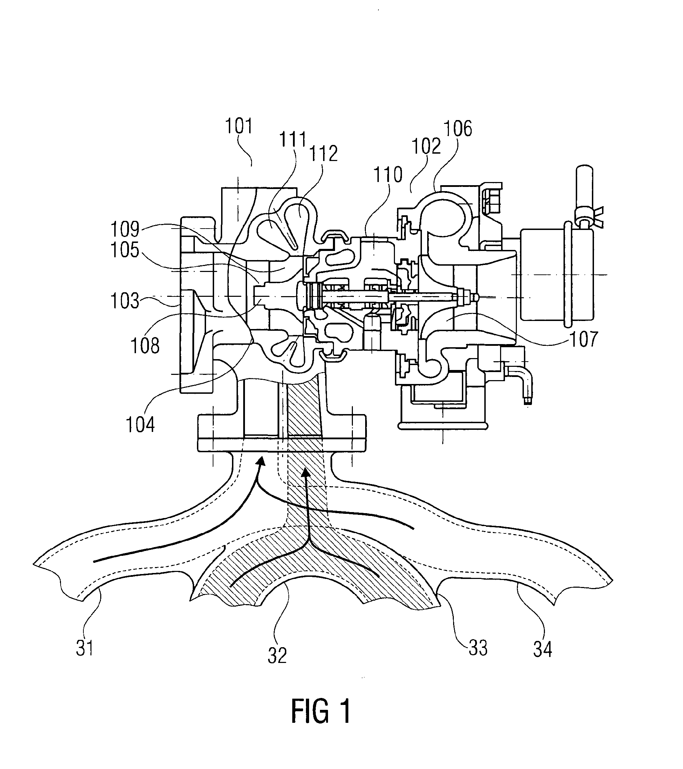

Figur 1 zeigt einen Querschnitt eines Abgasturboladers eines Vierzylinder-Ottomotors gemäß dem Stand der Technik. Der Abgasturbolader umfasst eine Turbine 101 und einen Verdichter 102, die auf einer gemeinsamen Welle 103 miteinander gekoppelt sind. Die Turbine 101 und der Verdichter 102 weisen ein Turbinengehäuse 104 mit einem Turbinenrad 105 bzw. ein Verdichtergehäuse 106 mit einem Verdichterrad 107 auf, wobei das Turbinenrad 105 eine Nabe 108 und

Leitschaufeln 109 umfasst. Zwischen dem Turbinengehäuse 104 und dem Verdichtergehäuse 106 befindet sich ein Lagergehäuse 110, in welchem sich die gelagerte Welle 103 befindet. Vor Einlass in das Turbinengehäuse 104 werden Abgase der Abgaskanäle 31 und 34 sowie der Abgaskanäle 32 und 33 der vier Zylinder zusammengefasst (gekennzeichnet durch die schwarzen Pfeile) und in Strömungskanäle 111 bzw. 112 geleitet.

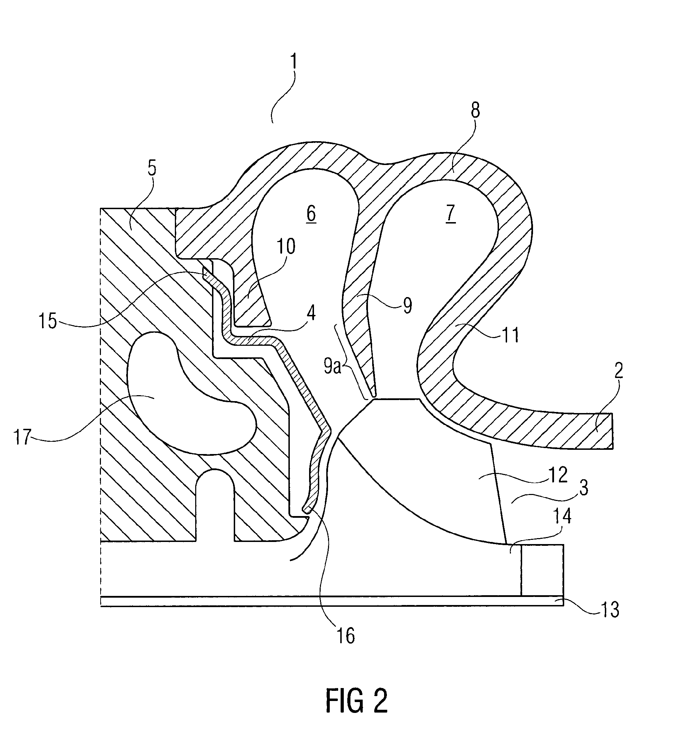

In Fig. 2 ist ein Querschnitt eines Abschnitts einer Ausführungsform eines erfindungsgemäßen Abgasturboladers gezeigt. Der Abschnitt zeigt eine Turbine 1 mit einem Turbinengehäuse 2, einem Turbinenrad 3 sowie einen Hitzeschild 4 und ein Lagergehäuse 5. Das Turbinengehäuse 2 weist zwei parallel zueinander verlaufende Strömungskanäle 6, 7 von Abgasen auf, die von außen durch eine vom Turbinengehäuse 2 gebildete Spiralwand 8 begrenzt sind. Die Strömungskanäle 6, 7 sind voneinander durch eine im Turbinengehäuse 2 verlaufende Trennwand 9 getrennt (Zwillingsstromgehäuse). Strömungskanal 6 wird durch eine dem Lagergehäuse 5 zugewandten Wand 10 und die Trennwand 9 begrenzt, während Strömungskanal 7 durch die Trennwand 9 und eine dem Lagergehäuse 5 abgewandte Wand 11 begrenzt wird. Die Spiralwand 8 hat in diesem Ausführungsbeispiel eine durchschnittliche Wandstärke von 5 mm. Die Wandstärke der Trennwand 9 beträgt an einem den Leitschaufeln 12 abgewandten Ende 4 mm und an einem den Leitschaufeln 12 zugewandten Ende 1 mm. Die teilweise hinterschneidungsfreie Trennwand 9a ist derart in radialer Richtung bearbeitet, dass die Trennwand 9 sich bis zu den Leitschaufeln 12 erstreckt. Dadurch wird verhindert, dass die Abgase aus dem Strömungskanal 6 nicht in den Strömungskanal 7 gelangen und umgekehrt.

Weiterhin ist die Trennwand 9 in axialer Richtung bearbeitet. Eine Wandstärke der Trennwand 9 nahe an den Leitschaufeln 12 ist in axialer Richtung sehr dünn ausgeführt (1 mm), damit die Leitschaufeln 12 möglichst wenig durch die Trennwand 9 versperrt werden. Die Trennwand 9 hat an einem turbinenradseitigen Ende einen derart spitzen Verlauf, dass die Leitschaufeln 12 nahezu vollständig beströmt werden. Durch die bearbeitete Oberfläche der Trennwand 9 ist eine Wandrauigkeit verringert. Eine axiale Position der bearbeiteten Trennwand 9 ist auf 0,05 mm genau eingestellt, was erheblich genauer ist als eine Toleranz von 0,3 mm einer unbearbeiteten Trennwand. Durch die Bearbeitung ist zudem eine beim Gießen des Turbinengehäuses 2 entstandene Gusshaut der Trennwand 9 entfernt. Dies reduziert eine Rissbildung der Trennwand 9 deutlich, weil sich die Trennwand 9 gleichmäßiger erhitzen kann.

Das Turbinenrad 3 ist auf einer Welle 13 montiert und weist eine Nabe 14 und die Leitschaufeln 12 auf. Die Welle 13 ist im Lagergehäuse 5 drehbar gelagert. Um auftretende Axialkräfte aufzunehmen, ist ein Axiallager vorgesehen (nicht dargestellt), welches mittels eines Schmieröls geschmiert wird.

Bei dem gezeigten Abgasturbolader eines Ottomotors können Abgastemperaturen von bis zu 1050 °C oder mehr auftreten. Aus diesem Grund ist zwischen der Nabe 14 und der dem Lagergehäuse 5 zugewandten Wand 10 ein Hitzeschild 4 angeordnet, der den Wärmeeintrag in die Lagerung reduziert. Um temperaturbedingte Verbiegungen zu kompensieren, ist der Hitzeschild 4 an einem Federarm 15 federnd angeordnet und zwischen dem Lagergehäuse 5 und dem Turbinengehäuse 2 eingespannt. Zwischen dem Hitzeschild 4 und der dem Lagergehäuse 5 zugewandten Wand 10 gibt es im dargestellten Ausführungsbeispiel einen radialen Abstand von 1 mm. Ferner gibt es zwischen dem Hitzeschild 4 und der Nabe 14 einen hinreichend großen Spalt, um zu vermeiden, dass das Turbinenrad 3 im Betrieb beim Drehen gestört oder beschädigt wird. Andererseits ist der Spalt klein genug, um ein Abführen von Abgasen in das Lagergehäuse 5 zu vermeiden. Im Anführungsbeispiel beträgt eine Breite des Spalts etwa 1 mm. Der Hitzeschild 4 hat im Ausführungsbeispiel eine axiale Wandstärke von 0,4 mm und ist aus einem gebogenen Blech einer Nickellegierung hergestellt. Statt des Blechs sind aber auch eine hitzebeständige Keramik, eine andere hitzebeständige Metalllegierung oder ein hitzebeständiger Metallwerkstoff für die Verwendung des Hitzeschildes 4 möglich. Der Hitzeschild 4 überbrückt die Lücke zwischen der dem Lagergehäuse 5 zugewandten Wand 10 und dem Turbinenrad 3 und ist zudem strömungsführend zwischen dem Strömungskanal 6 und der Nabe 14 angebracht. Strömungsführend heißt, dass eine Krümmung der Nabe 14 über den Hitzeschild 4 bis zu der dem Lagergehäuse 5 zugewandten Wand 10 stetig fortgesetzt wird und in eine Krümmung der dem Lagergehäuse 5 zugewandten Wand 10 übergeht. Eine glatte Oberfläche des Hitzeschildes 4 bewirkt eine Reduktion von Strömungsverlusten. Der Hitzeschild 4 weist verschiedene abgestufte Wölbungen auf und die Form des Hitzeschildes 4 ist einer Geometrie des Lager- 5 und Turbinengehäuses 2 angepasst. Der Hitzeschild 4 ist um die Welle 13 weitgehend symmetrisch ausgebildet. Bei einem Ende 16 des Hitzeschildes ist radial eine Öffnung vorgesehen, damit der Hitzeschild 4 bei einer Montage auf das Lagergehäuse 5 bzw. die Welle 13 geschoben werden kann. Um neben dem Hitzeschild 4 eine Temperaturbelastung des Lagergehäuses 5 weiter zu reduzieren, wird das Lagergehäuse 5 mittels eines Wasserkerns 17 gekühlt.

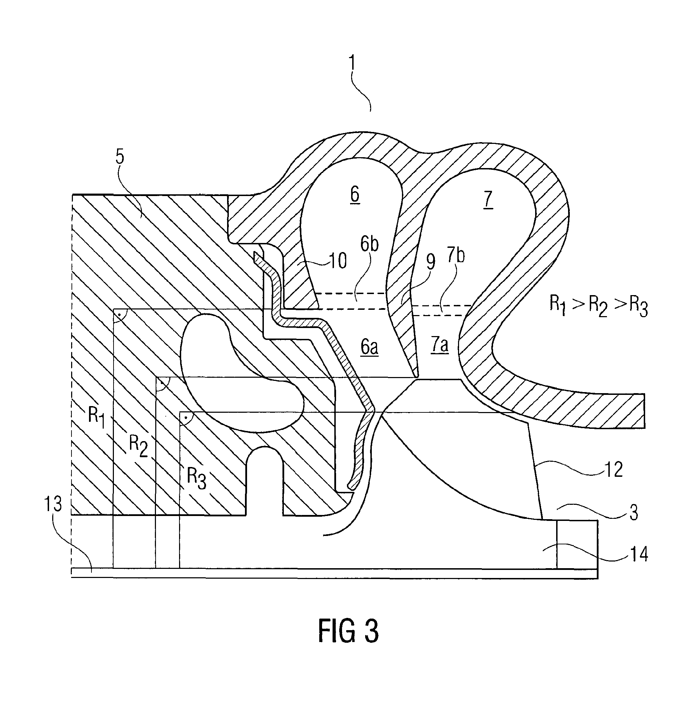

Figur 3 zeigt den gleichen Abgasturbolader wie Figur 2. Es sind in der Abbildung drei Abstände R₁, R₂ und R₃ markiert. Der kleinste radiale Abstand R₁ der dem Lagergehäuse 5 zugewandten Wand 10 zur Welle 13 ist mindestens in einem Eintrittsbereich 6a auf einem größeren radialen Abstand angeordnet, als der kleinste radiale Abstand R₂ der Trennwand 9 zur Welle 13. In der Figur sind die Übergänge der Spiralen, an denen die kleinsten Querschnitte direkt an die Eintrittsbereichsquerschnitte grenzen, gestrichelt gekennzeichnet (Zungen 6b, 7b). Im Ausführungsbeispiel ist eine Zunge 7b des Strömungskanals 7 in einer Umfangsrichtung der Spirale in einem gleichen Winkel zu einer Zunge 6b des Strömungskanals 6 positioniert. Es ist aber ebenso möglich, dass die Zunge 7b in der Umfangsrichtung der Spirale in einem Winkel zur Zunge 6b versetzt ist. Ein radialer Abstand R₁-R₃ der dem Lagergehäuse 5 zugewandten Wand 10 zur Nabe 14 beträgt im Ausführungsbeispiel 12 mm.

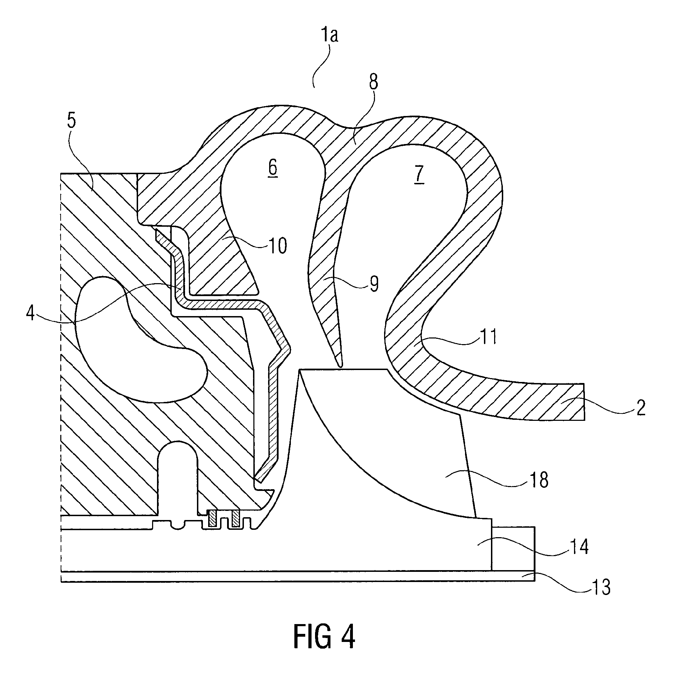

Die Turbine 1 aus den bisher gezeigten Figuren ist eine Turbine mit halbaxialer-radialer Zuströmung. Die Abgase aus dem Strömungskanal 7 strömen radial auf die Leitschaufeln 12, während die Abgase aus dem Strömungskanal 6 neben einer radialen Strömungskomponente auch eine axiale Strömungskomponente aufweisen. Außer der gezeigten Turbine 1 mit halbaxialer-radialer Zuströmung ist die Erfindung aber auch für eine Turbine mit radialer Zuströmung geeignet. Eine solche Turbine 1a ist in der Figur 4 gezeigt. Hier erfolgt die Zuströmung auf die Leitschaufeln 18 aus den beiden Strömungskanälen 6, 7 im Wesentlichen in radialer Richtung. Folglich sind die Leitschaufeln 18 der geänderten Strömungsführung angepasst und weisen eine etwas andere Gestaltung auf als die Leitschaufeln 12 bei der halbaxialer-radialer Zuströmung (Figuren 2 und 3).

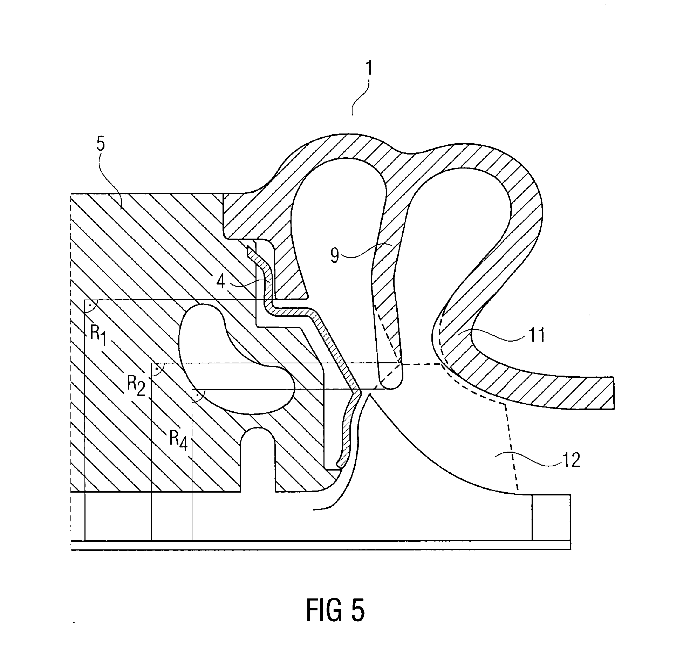

Figur 5 soll verdeutlichen, dass der kleinste radiale Abstand der Trennwand 9 auf einem radial kleineren Abstand R₄ zur Welle gegossen werden kann als eine Position der Leitschaufeln 12. Die gestrichelten Linien in der Figur stellen Verläufe der Trennwand 9 und der dem Lagergehäuse 5 abgewandten Wand 11 nach der Bearbeitung dar. Außerdem sind zum Vergleich die Leitschaufeln 12 gestrichelt gezeichnet. Hierbei ist es klar, dass die unbearbeitete Trennwand 9 den Leitschaufeln 12 im Weg steht.

In den oben aufgelisteten Ausführungsbeispielen ist jeweils ein Abgasturbolader eines Ottomotors gezeigt. Der Abgasturbolader gemäß der Erfindung beschränkt sich aber nicht auf die genannten Ottomotoren und kann ebenso bei Dieselmotoren eingesetzt werden.

Der Abgasturbolader aus den gezeigten Figuren wird hergestellt, indem das Turbinengehäuse 2 beispielsweise aus einer hitzebeständigen Graugusslegierung gegossen wird. Statt der Graugusslegierung ist zum Beispiel auch eine Stahlgusslegierung möglich. Hierbei wird der Abstand R₁ der dem Lagergehäuse 5 zugewandten Wand 10 auf einem größeren Abstand zur Welle 13 gegossen als der Abstand R₄ der unbearbeiteten Trennwand 9, wie zum Beispiel in der Figur 5 dargestellt. Der Abstand R₄ zur Welle 13 ist geringer als eine Kontur der Leitschaufeln 12 zur Welle 5 (Fig. 5). In einem weiteren Schritt wird die Trennwand 9 in radialer Richtung beispielsweise mittels eines Glockenwerkzeuges derart zerspant, dass die Trennwand 9 bis zu den Leitschaufeln 12 verkürzt wird und die Abgase aus den Strömungskanälen 6 und 7 getrennt auf das Turbinenrad 3 strömen. Durch die axiale Zerspanung der Trennwand 9 wird eine Versperrung der Leitschaufeln 12 durch eine axiale Wandstärke der Trennwand 9 von 1 mm minimal versperrt. Um eine Lücke zwischen der dem Lagergehäuse 5 zugewandten Wand 10 zu schließen, die Strömungsführung aus den Strömungskanälen 6, 7 auf die Turbinenschaufeln 12 zu optimieren und um das Lagergehäuse 5 vor zu hohen Temperaturen zu schützen, wird zwischen der dem Lagergehäuse 5 zugewandten Wand 10 und der Nabe 14 ein Hitzeschild 4 strömungsführend und federnd angeordnet. Nach der Zerspanung der Trennwand 9 und der dem Lagergehäuse 5 abgewandten Wand 11 wird der Abgasturbolader zusammengebaut.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Die beschriebenen Ausführungsformen sind dabei miteinander kombinierbar, insbesondere einzelne Merkmale davon.

## Patentansprüche

1. Abgasturbolader mit einer Turbine (1), umfassend ein auf einer Welle (13) angeordnetes Turbinenrad (3) mit einer Nabe (14) und Leitschaufeln (12), ein an ein Lagergehäuse (5) angrenzendes Turbinengehäuse (2), das zwei weitgehend parallel zueinander verlaufende Strömungskanäle (6, 7) von Abgasen aufweist, die von außen durch eine vom Turbinengehäuse (2) gebildete Spiralwand (8) begrenzt sind und voneinander durch eine vom Turbinengehäuse (2) gebildete Trennwand (9) getrennt sind und die in einem Eintrittsbereich radial offen zum Turbinenrad (3) ausgebildet sind, sodass die Abgase auf die Leitschaufeln (12) strömen, wobei eine axiale Richtung durch eine Längsrichtung der Welle (13) definiert ist und ein radialer Abstand durch eine Richtung senkrecht zu der Längsrichtung der Welle (13) definiert ist, wobei die Spiralwand (8) eine dem Lagergehäuse (5) zugewandte zum ersten Strömungskanal (6) gehörende Wand (10) umfasst,
**dadurch gekennzeichnet, dass**
der kleinste radiale Abstand der dem Lagergehäuse (5) zugewandten Wand (10) zur Welle (13) mindestens im Eintrittsbereich (6a) einen größeren radialen Abstand zur Welle (13) aufweist als der kleinste radiale Abstand der Trennwand (9) zur Welle (13), wobei ein Hitzeschild (4) zwischen der dem Lagergehäuse (5) zugewandten Wand (10) und der Nabe (14) strömungsführend angeordnet ist.

2. Abgasturbolader nach Anspruch 1, **dadurch gekennzeichnet, dass** der Hitzeschild (4) federnd angeordnet ist.

3. Abgasturbolader nach einem der Ansprüche 1 oder 2, **dadurch gekennzeichnet, dass** der Hitzeschild (4) eine axiale Wandstärke von 0,4 mm bis 0,5 mm aufweist.

4. Abgasturbolader nach einem der vorangehenden Ansprüche, **dadurch gekennzeichnet, dass** der kleinste Abstand zwischen der dem Lagergehäuse zugewandten Wand (10) und dem Turbinenrad (3) mindestens 10 mm beträgt.

5. Abgasturbolader nach einem der vorangehenden Ansprüche, **dadurch gekennzeichnet, dass** die Trennwand (9) und/oder die Trennwand (9) und die Spiralwand (8) im Eintrittsbereich in radialer Richtung und/oder in axialer Richtung bearbeitet sind.

6. Abgasturbolader gemäß Anspruch 5, **dadurch gekennzeichnet, dass** eine Wandstärke der bearbeiteten Trennwand (9) an einem dem Turbinenrad (3) zugewandten Ende in axialer Richtung kleiner als 2 mm ist.

7. Abgasturbolader nach einem der vorangehenden Ansprüche 5 und 6, **dadurch gekennzeichnet, dass** eine Oberfläche der bearbeiteten Trennwand (9) und/oder der bearbeiteten Spiralwand (8) eine reduzierte Wandrauigkeit hat in Bezug auf eine nicht-bearbeiteten Oberfläche der Trennwand (9) und/oder der Trennwand (9) und der Spiralwand (8).

8. Abgasturbolader nach einem der vorangehenden Ansprüche, **dadurch gekennzeichnet, dass** sich die Trennwand (9) radial bis zu den Leitschaufeln (12) derart erstreckt, dass die Abgase der beiden Strömungskanäle (6, 7) im Wesentlichen getrennt auf die Leitschaufeln (12) strömen.

9. Abgasturbolader nach einem der vorangehenden Ansprüche 4 bis 9, **dadurch gekennzeichnet, dass** eine Fertigungstoleranz der bearbeiteten Spiralwand (8) und/oder der bearbeiteten Trennwand (9) kleiner als 0,10 mm, vorzugsweise 0,05 mm, beträgt.

10. Verfahren zur Herstellung eines Abgasturboladers mit einer Turbine (1), welche ein auf einer Welle (13) angeordnetes Turbinenrad (3) mit einer Nabe (14) und Leitschaufeln (12), ein an ein Lagergehäuse (5) angrenzendes Turbinengehäuse (2), das zwei weitgehend parallel zueinander verlaufende Strömungskanäle (6, 7) von Abgasen aufweist, die von außen durch eine vom Turbinengehäuse (2) gebildete Spiralwand (8) begrenzt sind und voneinander durch eine vom Turbinengehäuse (2) gebildete Trennwand (9) getrennt sind und die in einem Eintrittsbereich radial offen zum Turbinenrad (3) ausgebildet sind, sodass die Abgase auf die Leitschaufeln (12) strömen, umfasst, wobei ein radialer Abstand durch eine Richtung senkrecht zu einer Längsrichtung der Welle (13) definiert ist und eine axiale Richtung durch eine Längsrichtung der Welle (13) definiert ist, wobei die Spiralwand (8) eine dem Lagergehäuse zugewandte zum ersten Strömungskanal (6) gehörende Wand (10) aufweist, umfassend die Schritte:
Gießen des Turbinengehäuses (2), wobei der kleinste radiale Abstand der dem Lagergehäuse zugewandten Wand (10) zur Welle (13) mindestens im Eintrittsbereich (6a) auf einem größeren radialen Abstand zur Welle (13) eingestellt wird als der kleinste radiale Abstand der Trennwand (9), wobei der kleinste radiale Abstand der Trennwand (9) zur Welle (13) auf einem kleineren radialen Abstand zur Welle (13) eingestellt wird als eine auf einer gleichen axialen Position gelegene Kontur der Leitschaufeln (12),
Bearbeiten der Trennwand (9) in radialer Richtung derart, dass die Trennwand (9) radial bis zu den Leitschaufeln (12) verkürzt wird und die Abgase der beiden Strömungskanäle (6, 7) im Wesentlichen getrennt auf das Turbinenrad strömen und
Bearbeiten der Trennwand (9) in axialer Richtung derart, dass eine Versperrung der Leitschaufeln (12) durch die Trennwand (9) minimal ist.

11. Verfahren zur Herstellung des Abgasturboladers gemäß Anspruch 10, **dadurch gekennzeichnet, dass** ein Hitzeschild (4) zwischen der dem Lagergehäuse (5) zugewandten Wand (10) und der Nabe (14) strömungsführend angebracht wird.

12. Verfahren zur Herstellung des Abgasturboladers nach einem der Ansprüche 10 oder 11, **dadurch gekennzeichnet, dass** die dem Lagergehäuse zugewandte Wand (10) einen kleinsten radialen Abstand von mindestens 10 mm zum Turbinenrad (3) aufweist.

13. Verfahren gemäß einem der Ansprüche 10 bis 12, **dadurch gekennzeichnet, dass** es zur Herstellung eines Abgasturboladers nach einem der Ansprüche 1 bis 9 geeignet ist.
